# EUROPEAN PATENT SPECIFICATION

(11) **EP 2 955 634 B1**
(45) Date of publication and mention of the grant of the patent: **03.03.2021**
(21) Application number: 14171787.6
(22) Date of filing: 10.06.2014
(51) Int. Cl.: G06F 12/109

(54) **Paravirtualization-based interface for memory management in virtual machines**
Paravirtualisierungsbasierte Schnittstelle zur Speicherverwaltung in virtuellen Maschinen
Interface à base de paravirtualisation pour gestion de mémoire dans des machines virtuelles

(43) Date of publication of application: 16.12.2015
(73) Proprietor: Deutsche Telekom AG, 53113 Bonn (DE)
(72) Inventor: Peter, Michael, 10551 Berlin (DE); Nordholz, Jan, 10585 Berlin (DE); Danisevskis, Janis, 10961 Berlin (DE)
(74) Representative: Vossius & Partner Patentanwälte Rechtsanwälte mbB

(56) References cited:
- US-A1- 2006 259 732
- US-A1- 2010 250 869
- US-A1- 2012 151 117

## Description

The invention relates to a memory virtualization method for systems with processors which offer virtualization support but no second level address translation (SLAT).

The invention relates in particular to a system which requires hardware assistance for register virtualization but uses paravirtualization techniques for MMU virtualization.

The complexity of modern devices raises questions as to their reliability and resistance in connection with attacks by malware. A possibility of counteracting this threat is the use of virtualization, leading to a considerable reduction in possible effects of malware.

### Prior art

### Guest

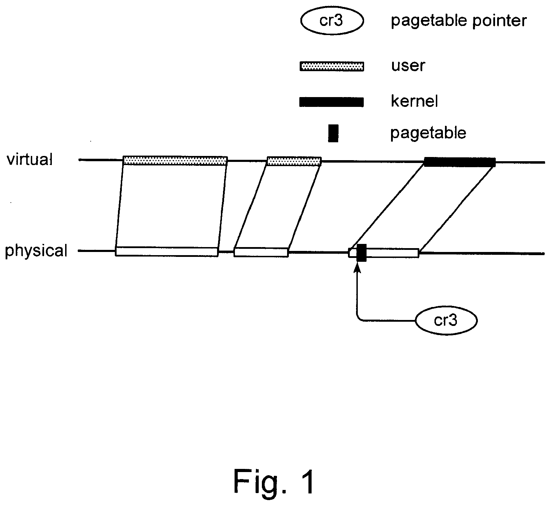

On the basis of an IA32 system, Figure 1 shows the most important aspects of memory management. The following properties are relevant:
- There are two address spaces: virtual and physical. The code uses virtual addresses which are translated into physical addresses by means of the mechanism described below. (Note: The virtual addressing is not active when the system starts and is activated only during the initialization phase.)
- The virtual address space is divided into pages. Each page is in one of the following states:
   ∘ invalid/non-present: Access to the page always causes a pagefault as no translation to a physical page exists
   ° present: a translation to a physical page exists. Yet, access to the page can be further restricted.
      - Privilege level
         ° Kernel: Access to the page is only possible if the processor is in the privileged state. Attempts to access the page in the unprivileged state cause a pagefault.
         ° User: Access to the page is possible in both privilege levels.
      - Access type
         ° Read only: the page cannot be written to
         ° Read-write: the page can be read from and written to
- For each page which is not in the invalid state, it is specified in the pagetable which physical page is accessed. In order to limit the size of the pagetable, which is important in particular in case of sparsely occupied address spaces, a tree structure is used in which unused leaf nodes can be omitted. The address of leaf nodes is specified as physical address.
- The pagetable is referenced by a register (cr3; "control register 3"; register in x86 processors in which the pointer is held onto the pagetable), wherein its physical address is used. For security and safety reasons, the pagetable typically lies in memory regions that can be only accessed in the privileged mode.
- Since a lookup in the pagetable for each memory access would be too involved, page translations are stored in a cache, viz. the translation lookaside buffer (TLB). For x86 systems it is defined that a reloading of the register which refers to the current pagetable additionally leads to an emptying of the TLB. Because of this behavior it is not necessary to synchronize the new state with the TLB after modifications of inactive pagetables.

### Virtualization

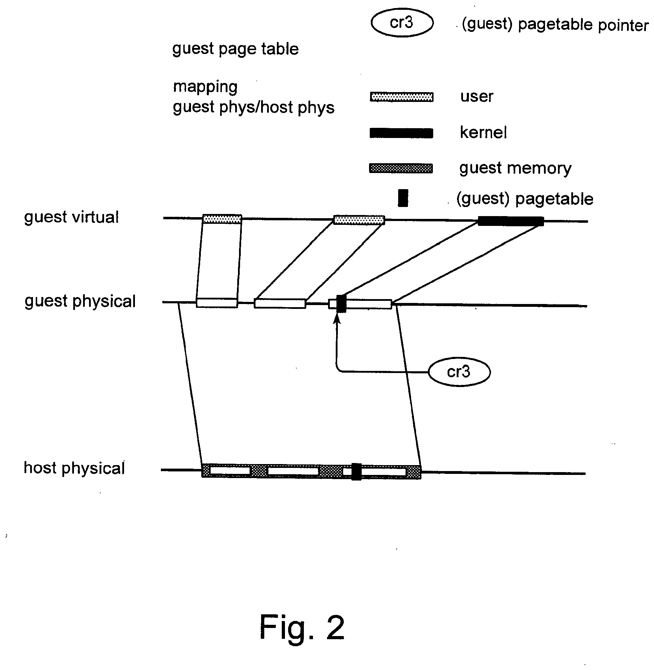

Figure 2 shows a virtualized system as far as address spaces are concerned. The guest finds a working environment which is not different from that of a non-virtualized system (see the above section "Guest"). In particular, the guest can map virtual pages on physical pages by means of a pagetable.

The guest can only access the parts of the physically available memory assigned to it by the underlying system (host system). The host specifies, which ranges of the guest physical address space are valid and how these regions are mapped onto system physical memory.

By concept, memory access is a two-stage process. In a first step, the guest virtual address is translated by means of the guest pagetable into a guest physical address and then, in a second step, it is further translated by means of a "guest-physical-to-host-physical mapping" into a host physical address. The most important kinds of memory virtualization are described in more detail in the below section "Memory virtualization".

### x86 virtualization

x86 systems do not meet the Popek-Goldberg criterion, so that the setup of virtual machines is quite complex and leads to high runtime costs. Both Intel and AMD offer hardware assistance for the virtualization in their processors (Intel: VT-x; AMD: AMD-V), which considerably facilitates the setup of efficient virtual machines (VMs).

### Terminology

The terminology used in the following is now introduced briefly. For many virtualization concepts there exist many terms, and the use thereof is quite often contradictory and often at least confusing. The term used by us is always listed first.

### Address spaces

In non-virtualized systems it is distinguished between two address spaces: virtual and physical.
- guest physical address (GPA)
- physical address
- intermediate physical address (IPA)
- host physical address (HPA)
- machine address

Note that "guest physical address" (GPA) denotes the same as "intermediate physical address" (IPA), and that HPA denotes the machine address.

In the following, the address spaces are referred to as follows in accordance with the above-mentioned four possible combinations:
- guest virtual
- guest physical
- host virtual
- host physical

Unlike the other address spaces, "host virtual" plays only a minor role in virtualization, if any at all.

### Pagetables

Instead of the guest pagetable, which translates the guest virtual addresses into the guest physical addresses and for safety and security reasons cannot be used directly for the implementation of the guest, a shadow pagetable is used. In addition to safety reasons (protection of the host and other guests), a further reason plays a role for the use of shadow pagetables: Only shadow pagetables offer enough flexibility for implementing several guests simultaneously and efficiently on one host. The following further names are common in this regard:
- shadow pagetable
- system pagetable
- effective pagetable

The shadow pagetables are managed by the hypervisor and translate from guest virtual into host physical. A shadow pagetable corresponds to a guest pagetable and typically comprises a translation for a subset of the virtual addresses covered by the guest pagetable. This subset corresponds to a requirements-based population of the shadow pagetable.

The pagetable of the host, which is used by the host when it does not perform a guest, is also referred to as "host pagetable".

### Hardware assistance

The "x86 instruction set architecture" (ISA) does not meet the Popek-Goldberg criterion necessary for the efficient setup of trap-and-emulate type VMs. In 2005/2006, Intel and AMD therefore introduced instruction set extensions (Intel: VT-x; AMD: AMD-V). If such extensions are used, the following terms are used:
- hardware-assisted virtualization
- accelerated virtualization
- hardware virtual machine (HVM) (Xen)
- native virtualization (Virtual Iron)

In contrast thereto are paravirtualization techniques which do not need such assistance, yet require guest kernel modifications.

### Execution mode

In a system with hardware virtualization assistance it is distinguished whether said assistance is presently used or not. In the negative, the following terms are used:
- host mode (AMD)
- root mode (Intel)

In AMD-V and VT-x, the host mode is selected such that it is completely compatible with a system without hardware virtualization assistance:
- guest mode (AMD)
- non-root mode (Intel)

### VM operation

At any time, the processor performs either a guest or the host. The transitions are referred to as "VM entry" (host to guest) and "VM exit" (guest to host). Mechanisms exist, wherein the hypervisor can enforce to regain control after a maximum time.

In the course of a VM entry, the processer switches from the host pagetable to a shadow pagetable (see the above section "Shadow pagetables"), which then acts as effective pagetable responsible for the guest memory access translation. When the VM execution is suspended with a VM exit, the processor switches back to the host pagetable.

The shadow pagetable is maintained by the hypervisor. Technically speaking, when the shadow pagetable is used, the TBL entry is generated also without the aid of the hypervisor. However, the hypervisor is responsible for the management of the shadow pagetables. In the general case, the number of guest pagetables is higher than the number of shadow pagetables present in the hypervisor.

### Pagefault

If the processor cannot translate a virtual address into a physical address by means of the effective pagetable, it raises a pagefault.

In systems without SLAT, each memory access for which the effective pagetable (shadow pagetable) does not contain a valid entry (non-existing, insufficient rights) results in a VM exit. The control transfer to the hypervisor is necessary because the condition can be either because (1) the guest pagetable contains a valid entry, which the hypervisor has only not incorporated into the shadow pagetable yet ("shadow pagefault") or (2) the guest pagetable does not contain avalid translation ("guest pagefault"). Only the latter occurs in non-virtualized systems. In case of a guest pagefault, the fault is forwarded to the guest kernel. To handle this situation efficiently, the virtualization extensions offer mechanisms whereby the pagefault is automatically injected in the course of the next VM entry ("fault injection").

### Binding

Since the number of guest address spaces can be greater than the number of shadow pagetables present in the hypervisor, it cannot be guaranteed that a respective shadow pagetable is at any time assigned to each guest pagetable. For the time a shadow pagetable represents a guest pagetable, the former is said "to be bound" to the latter.

The currently valid guest pagetable must be bound to a shadow pagetable.

The hypervisor can cancel the binding between a guest pagetable and its shadow pagetable in order to bind the latter to another guest pagetable, for example in case no additional pagetable can be allocated because of a memory shortage.

### Memory virtualization

For reasons of performance, instead of first translating the guest virtual address into guest physical one and then, in turn, translating that into a host physical one, the two steps are merged. The CPU TLB contains entries which map directly from guest virtual onto host physical. Depending on the abilities of the processor, the TLB entries are calculated by the processor at runtime (see the below section "Second level address translation (SLAT)") or read directly out of the shadow pagetable which is managed by the hypervisor (see the below section "Shadow pagetables"). In the latter case, the hypervisor has to compute the second step in advance (when generating entries for the shadow pagetable) and place the computed result into the shadow pagetable from where the processor then reads it.

### Second level address translation (SLAT)

Some processors offer the possibility of specifying the guest-physical-to-host-physical mapping (see the above section "Virtualization") in a processor-readable format. Often, the format chosen for the description is broadly similar to that of pagetables (virtually indexed, tree structured). Such a facility is called "second level address translation" (SLAT). Thus, the entire necessary information is available to the processor in a form which is suitable for generating the TLB entry necessary for translating a guest virtual address completely by hardware without additional aid of the hypervisor.

Compared to purely software-based methods (shadow pagetables, see below), SLAT incurs lower run-time overhead. Depending on the vendor, SLAT is also referred to as EPT (extended pagetable, Intel) or RVI (rapid virtualization indexing, AMD).

In order to make the differences vis-à-vis the shadow pagetable methods discussed further below more easily comprehensible, some details are briefly described: When the processor is in the host mode (see the above section "Execution mode"), there is, like in legacy systems, a cr3 in which the pointer is held onto the currently valid pagetable. In the guest mode (see the above section "Execution mode") two pagetable registers exist: One register takes the part of cr3 in the guest. This register can also be written-in and read-out by the guest kernel as required. Moreover, there is a second register (without explicit name) which holds a pointer onto the nested pagetable. The hypervisor can write into this register in the course of a VM entry. It is the object of the nested pagetable to translate, when the guest accesses the memory in the form of guest physical addresses, these addresses into host physical addresses. This is in particular the case when there is a so-called "guest pagetable walk" (traversing of a pagetable in the guest which provides, as the result for a guest virtual address, a guest physical address or the result that there is no valid translation) after a TLB miss. For regular memory accesses which use virtual addresses, the translation is implicitly cached in the TLB entry.

### Shadow pagetables

Because of its complexity, many processors of the lower price categories do not have SLAT. Part of the translation tasks must then be carried out by software, i.e. by the hypervisor.

Processors without SLAT have cr3 but no further registers which are related with the memory provision for VMs. Hence, for safety and security reasons, the guest must not be allowed to access cr3. Any attempt of the guest to write in or read out of cr3 leads to a VM exit. The hypervisor thus has two tasks:
- managing the value on the basis of which the guest assumes that it is in cr3,
- maintaining a (shadow) pagetable which is used instead of the guest pagetable.

In the shadow pagetable, guest virtual addresses are translated into host physical addresses. It is the task of the hypervisor to calculate the host physical address based on the guest physical address mentioned in the guest pagetable. In addition to the guest physical address, the hypervisor further needs the source assignment for the guest. The source assignment lays out how guest physical addresses are mapped on host physical addresses.

The shadow pagetable can be filled in a lazy manner, i.e. only directly before the time point when an entry is required. The lack of an entry in the shadow pagetable causes a shadow pagefault which in turn leads to a VM exit. The hypervisor can then check whether the guest pagetable contains a valid entry for the virtual address to be translated. In the affirmative, it calculates on the basis thereof an entry for the shadow pagetable and enters it into the shadow pagetable and continues the execution.

Shadow pagetables are disadvantageous because each guest space requires its own shadow pagetable. The setup of the shadow pagetable is involved because the common implementations require a large number of switches between VM and hypervisor. As compared to SLAT, a clearly higher performance loss must be expected when using shadow pagetables.

A simple shadow pagetable implementation would emulate an x86 TLB as closely as possible:
- Use only one instance of a (shadow) pagetable.
- Completely discard its content upon every address space switch.

There are two aspects why nested paging (see the above section "Second level address translation (SLAT)") offers advantages:
1. Maintaining a shadow pagetable is involved. This also applies to the case that a shadow pagetable is stored for a later use after deactivation of the corresponding guest address space.
2. Without SLAT the hypervisor must choose between the two following options in case of guest address space switching:
   2.1 It uses only one shadow pagetable, empties the latter in case of guest switching and newly fills it in an involved fashion (see 1.), or
   2.2 it uses several shadow pagetables.

In the case of 2.2, the hypervisor must (1) provide more memory for the shadow pagetables and (2) guarantee that semantically admissible modifications of the guest pagetables are reflected in the shadow pagetables. The latter task may require to closely monitor guest pagetables, which introduces complexity and incurs runtime overhead.

A guest memory context is switched in two steps: The attempt of the guest to write into its cr3 leads to a VM exit, i.e. control is transferred to the hypervisor. The guest state allows the hypervisor to determine the value to be loaded. The latter is kept by the hypervisor and used later for loading operations of the shadow pagetable.

The hypervisor can either continue to use the currently used shadow pagetable after all entries have been invalidated or switch to another shadow pagetable. When using a further shadow pagetable, it must be guaranteed that it correctly reflects the state of its pendant in the guest. After a suitable shadow pagetable has been set, the execution of the guest is resumed.

### Paravirtualization

Paravirtualization is a virtualization technique in which the guest finds an interface being similar but not identical to the original platform. The reason for this modified interface is to avoid operations which cause clearly higher costs in a virtualized environment than in the non-virtualized environment.

Paravirtualization requires changes in the kernel of the guest operating system.

### Systems

- Xen is a virtualization solution available for many platforms (IA32, AMD64/Intel64, ARM). Depending on the abilities of the used platform, the guest system must be adapted (paravirtualization).
   Xen offers a paravirtualized memory management interface only on IA32 systems without h/w assistance for virtualization. Any access to a pagetable is implemented in the form of a hypercall. (h/w assistance is a hardware assistance (for virtualization) which allows (instruction set) extensions in processors which clearly facilitate the setup of efficient virtual machines. In Intel processors these extensions are called VT-x, in AMD processors AMD-V or SVM. Depending on the version, differently extensive sets of functions for register and memory (MMU) virtualization are provided. Aspects of virtualization related to address space management are referred to as MMU virtualization. The MMU (memory management unit) is the part of the processor responsible for implementing virtual memory.
   Xen does not support the methods for increasing the performance described in the present invention (batched updates).

There are further differences. The paravirtualization model of Xen needs functions which are only offered by 32-bit x86 processors (segment limit checks). (Some AMD processors offer segment limit checks also in the 64-bit mode which, however, is often described only insufficiently in the publically available documents. Intel processors do not offer such segment limit checks.) Against the background that modern Atom processors support 64 bit and virtualization (without SLAT), this case is relevant in practice. The Xen main line does not offer support for ARM processors without virtualization functions because segmenting is in principle not supported on ARM. In contrast thereto, the present solution according to the invention can also be implemented on ARM processors in conjunction with paravirtualization. Note that ARM virtualization extensions come always with SLAT, obviating the need for an advanced shadow pagetable management.
- Karma is a VMM (virtual machine monitor) running on the Fiasco micro-kernel. Karma runs only in systems offering support for nested/extended paging (NPT/EPT).
- KVM is a virtualization environment for the Linux kernel. It runs in systems offering support for CPU virtualization (VT, SVM) but not for SLAT (2.5.1). However, it does not offer therein a paravirtualized interface for the memory management.

### L4Linux

L4Linux is a port of the Linux kernel on an L4 micro-kernel, wherein paravirtualization techniques are used for both CPU virtualization and memory virtualization.

### Basic system

In the following, a system is described which can be used for implementing the invention described below.

### System architecture

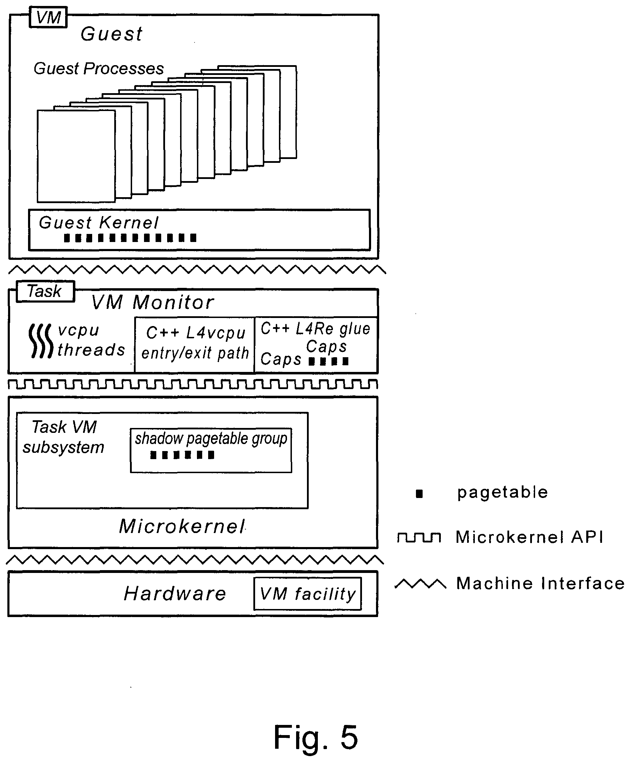

In the described model as shown in Figure 5, the microkernel, acting as the hypervisor, is the software component with the highest privilege level. The micro-kernel is responsible for guaranteeing the isolation between several guest systems and for providing a fair distribution of the system resources (CPU time, access to peripheral devices such as hard drives, display, keyboard, etc.) in accordance with a pre-defined guideline. The memory virtualization is a subsystem of the microkernel/hypervisor.

For executing guest systems, a further component, the so-called "virtual machine monitor" (VMM), is added, which coordinates the interaction between the guest and other (user level) components. The VMM has full control of the guest VM, but does not have any further specific privileges in the system. Even if a guest succeeded in gaining control of its VMM, the guest would still be subject to the restrictions enforced by the hypervisor.

### Mode of operation

### Setup

Before the guest operating system can start its execution, the VMM must register all memory areas which can be accessed by the guest with the micro-kernel so that the latter is able to execute memory virtualization functions and/or operations without the aid of the monitor. The micro-kernel needs this information for accessing the guest pagetable, because the pointer to the guest pagetable and also the links within the guest pagetable are indicated as (guest) physical addresses.

### Operation

For implementing the shadow pagetable system, the following operations are used:
- A change in the pagetable of the guest system (cr3 write) is intercepted by the hypervisor. The address of the new guest pagetable is stored in the hypervisor as a reference for future page entries to be taken over. The execution of the guest is then continued with the corresponding shadow pagetable, which either can be completely empty (if the guest uses this pagetable for the first time) or can already contain entries of earlier execution periods.

In other words: The address of the (guest) pagetable which the guest tries to load in cr3 is stored in the hypervisor. The address of the shadow pagetable managed by the hypervisor is loaded to cr3 in the course of a VM entry. The guest cr3 is stored for the following cases: (1) The guest tries to read out its cr3 and expects the value which it wrote last. (2) The hypervisor must decide in case of a pagefault whether it is a shadow fault or a guest fault and, for this purpose, must access the guest pagetable.
- If the guest system tries to access a memory page for which the corresponding entry in the shadow pagetable is either non-existing or does not allow the request access (kernel, write), the processor raises a pagefault which is handled by the hypervisor. It is distinguished between two cases:
   1. The guest pagetable contains an entry with sufficient privileges for the virtual address for which the pagefault occurred. Thus, it is a shadow pagefault. The hypervisor checks whether the entry refers to a physical memory page which is available to the guest system. In the affirmative, the hypervisor translates the entry from guest physical to host physical addresses and enters it into the shadow pagetable. The execution of the guest system can now be continued. The behavior for the case that the guest physical address is invalid is not defined. Here, "undefined" describes only the case from the point of view of the guest. From the point of view of the hypervisor, there must still be guaranteed isolation to both the host system and other guests. Correct behaviors would be to terminate the guest or to reroute the access to a page already assigned to the guest.
   2. There is no entry in the guest pagetable, or the present entry does not cover the required operation (write access on a read-only page). The hypervisor forwards the pagefault into the guest (fault injection) and continues the execution of the guest. The guest operating system is now responsible for the further handling.
- When the guest system removes or weakens entries from its active pagetable, the processor must be notified accordingly, because the old translations might perhaps be resident in the processor TLB. This behavior is defined in the x86 instruction set architecture. Upon intercepting the invalidation instruction, the hypervisor not only invalidates the TLB but also removes the corresponding entries from the shadow pagetable.
- If the memory virtualization exceeds its memory allotment predetermined by the hypervisor, for example because the guest system switches very quickly between very many different address spaces or because the address spaces are very densely occupied, the memory virtualization can - because of its nature as a buffer memory - remove any pages from presently non-active shadow pagetables and return them to the hypervisor. As a consequence of such a discarding of information, the pagetable must be newly built up when being used the next time. However, this only leads to additional memory faults (which are not directly visible to the guest system) because the pagetable in the guest still contains all required entries. (The accesses are visible insofar as they slow down the implementation of the guest.)

### Disadvantages of the prior art

A substantive part of the performance loss in the memory virtualization in systems without SLAT is due to the costs of maintaining the shadow pagetable. Moreover, the changes from the guest to the hypervisor (VM exit) and back (VM entry) incurred while handling shadow pagefaults are involved and slow operations.

Therefore, there is a need for a memory virtualization method for systems with processors which offer virtualization support but no second level address translation (SLAT), wherein the costs for the setup of the shadow pagetable are reduced as compared to the methods known from the prior art. Furthermore, there is a need for a memory virtualization method for systems without SLAT, wherein the number of changes from the guest to the hypervisor (VM exit) and back (VM entry) caused by shadow pagefaults can be kept as small as possible or wherein changes from the guest to the hypervisor (VM exit) and back (VM entry) caused by shadow pagefaults can be avoided completely.

US 2010/250869 A1 discloses a method according to the preamble of claim 1. Related technology is shown in US 2012/151117 A1 or US 2006/259732 A1.

### Description of the invention

It is the object of the present invention to provide a memory virtualization method for systems with processors which offer virtualization support but no second level address translation (SLAT), wherein the costs for the setup of the shadow pagetable are reduced as compared to the methods known from the prior art. This object is achieved with a method according to claim 1.

The present invention provides in particular a mechanism by means of which page translations are used for a relatively long time. For maintaining the synchrony of these stored translations and the pagetables on which they are based, it is necessary to synchronize also the modification of inactive pagetables.

In particular, the invention relates to systems which do not have SLAT, which relates in particular to a plurality of Intel's Atom processors. It is in particular an aim to achieve a performance with SLAT-free systems which has so far only been possible with SLAT.

The invention in particular provides an efficient method for memory management/virtualization in processors without SLAT (second level address translation) support. In particular, the problem of a valid correspondence between guest pagetable and shadow pagetable is dealt with.

Furthermore, the invention provides a paravirtualization solution for memory virtualization. The virtualization of the CPU (register) does not fall back on paravirtualization.

One aspect of the invention relates to a method for memory virtualization in systems with virtualization support as defined in claim 1.

According to one embodiment of the method according to the invention, after modification of the guest pagetable by a guest - as far as a shadow pagetable bound to said guest context exists - the kernel of the guest operating system guarantees the consistency of the guest pagetable with the shadow pagetable bound to the guest context.

Preferably, the kernel of the guest operating system calls the hypervisor by means of a hypercall, providing the hypervisor with the following arguments:
the modified guest memory context, in particular the address of the modified entry in the guest pagetable, and
the address of the address space guest physical.

In a preferred embodiment of the invention, the recording of the modifications of the guest pagetables in the queue is realized by recording one or more parameter triple(s).

Here, the parameter triple(s) preferably comprise(s):
(i) the modified guest context,
(ii) the modified virtual address in the modified guest context, and
(iii) the address in the address space guest physical assigned to the modified virtual address in the modified guest context.

According to one embodiment of the invention, the queue is lying on a marked page of the virtual address space and/or a page of the virtual address space which is known to the hypervisor. In one embodiment of the method according to the invention, the hypervisor is informed about the modifications of the guest pagetables, which have meanwhile been made and which are recorded in the queue, by means of a hypercall.

In one embodiment of the invention, the system is a multi-processor system.

In one embodiment of the method according to the invention, the shadow pagetable(s) is/are used by the processors in a shared manner.

Here, the parameter triple(s) preferably comprise(s):
(i) the modified guest context,
(ii) the modified virtual address in the modified guest context, and
(iii) the address in the address space guest physical assigned to the modified virtual address in the modified guest context.

According to one embodiment of the invention, the queue is lying on a marked page of the virtual address space and/or a page of the virtual address space which is known to the hypervisor.

In one embodiment of the method according to the invention, the hypervisor is informed about the modifications of the guest pagetables, which have meanwhile been made and which are recorded in the queue, by means of a hypercall.

In a preferred embodiment of the invention, the processor(s) transmit(s) a guest pagefault to the kernel of the guest operating system directly, in particular without intervention of the hypervisor.

In one embodiment of the invention, the pagefault treatment routine of the guest operating system is configured such that in a situation in which a shadow pagetable which was previously bound to a guest context is discarded and wherein a pagefault occurred in the guest operating system due to the no longer present shadow pagetable, the pagefault treatment routine calls the hypervisor.

In a preferred embodiment of the invention, the hypervisor is configured such that after having been called by the pagefault treatment routine in a situation in which a shadow pagetable which was previously bound to a guest context is discarded and wherein a pagefault occurred in the guest operating system due to the no longer present shadow pagetable, the hypervisor updates the shadow pagetable.

In one embodiment of the invention, the system is a multi-processor system.

In one embodiment of the method according to the invention, the shadow pagetable(s) is/are used by the processors in a shared manner.

According to one embodiment of the invention, the assignment of address spaces to shadow pagetables is synchronized, wherein it is in particular prevented
(a) that an address space is bound to two different shadow pagetables, and
(b) that an address space is bound to a shadow pagetable which is currently used on another processor.

Here, a guest context is assigned to exactly one virtual guest space, i.e. the assignment of guest context to shadow context is concerned.

In an unclaimed embodiment of the method according to the invention, access to a shadow pagetable itself is synchronized.

Here, assuming that an assignment of guest context to shadow context (see above) exists, it must still be guaranteed that the accesses to a shadow context, which might (theoretically) come simultaneously from several processors, does not lead to inconsistencies.

According to one embodiment of the method, modifications of the guest pagetables are recorded in a single queue which is used in a shared manner by all processors.

According to a preferred embodiment of the method, recording of the modifications of the guest pagetables takes place in accordance with the following condition(s):
(A) recording into a queue is performed only as long as there is an exclusive access to the guest pagetable on the guest level, and/or
(B) before the end of the exclusive access to a guest pagetable on the guest level, the modifications recorded so far in the queue are notified to the hypervisor.

In an unclaimed embodiment of the method according to the invention, the processor(s) support(s) the handling of address space IDs, ASIDs,
wherein the address spaces guest virtual for the guest operating system are coupled in a visible manner with a respective ASID,
wherein the guest operating system decides which address space guest virtual is optionally decoupled from a shadow pagetable bound to said address space.

According to one embodiment of the method of the invention, upon each update of a shadow pagetable, the hypervisor simultaneously sets the maximum A/D flags, preferably in case of read-only: accessed and in case of writable: accessed and dirty.

In an unclaimed embodiment of the method according to the invention, the A/D flags are accumulated in the shadow pagetable and the state of a page is interrogated by requesting the state of the page from the hypervisor, wherein the request from the hypervisor is preferably realized by means of a hypercall.

Note that the flags always relate to the virtual address space.

In an unclaimed embodiment of the invention, in case a guest context is displaced from the shadow pagetable, the A/D flags so far accumulated in the shadow pagetable are re-written into the guest pagetable.

In one embodiment of the invention, the kernel of the guest operating system is responsible for assigning address spaces to shadow pagetables, and the kernel of the guest operating system has to guarantee that the context of the handling routine remains bound to a shadow pagetable. Here, "assigning" relates to "guest contexts" to which "shadow contexts" are assigned. Moreover, "handling routine" relates here to a part of the code which, as a consequence of an occurring event, must be carried out within a specific time.

The time period necessary for building up the shadow context must be added to the time required for calculating a result. Ideally, this additionally required time is reduced to zero if it can be guaranteed that the shadow context is already completely present.

In an unclaimed embodiment of the method according to the invention, the hypervisor decides which address space is bound for which time to which shadow pagetable. Further, the guest operating system can mark selected address spaces in a particular manner, preferably by a hypercall. Moreover, address spaces marked in this manner never lose their binding to the respective shadow pagetable assigned to them.

In one embodiment of the method according to the invention, the system has to react to events in real time, and the event is preferably an interrupt request (IRQ).

The method describes a simplification which utilizes the fact that the access to the pagetables of a guest context is already synchronized in the guest. Instead of taking suitable synchronization measures upon detection of a simultaneous access, access is completely terminated in this case. This case never occurs in a correct guest operating system, so that a very simple implementation in the hypervisor is possible.

### List of Figures

- Figure 1: (schematically) shows a non-virtualized system.
- Figure 2: (conceptually) shows a virtualized system. It is pointed out that the handling of the cr3 (of the guest) depends on the efficiency of the used virtualization technology. With SLAT (see the above section "Second level address translation (SLAT)") the CPU provides a physical register which can be read-out and written-in by the guest kernel. Without SLAT, cr3 is a host-owned resource. Each attempt of the guest to access it causes a VM exit. Here, the hypervisor is responsible for monitoring the values which the guest tries to write into the cr3 and for producing them on reads.

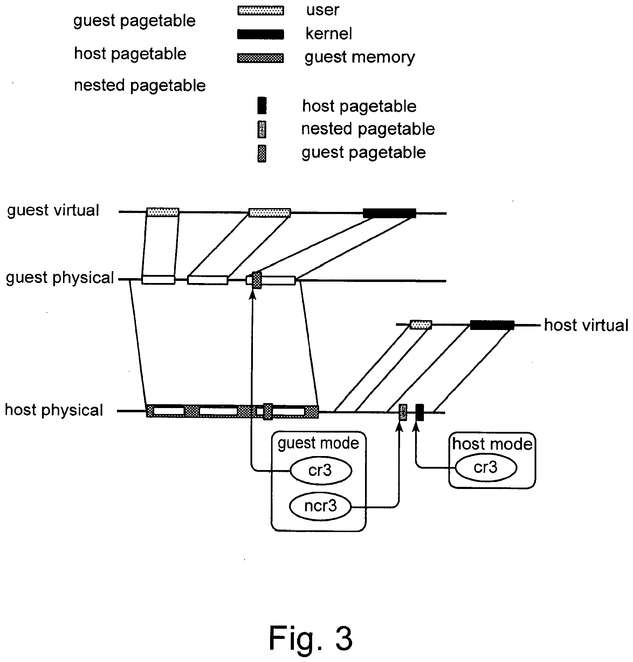

- Figure 3: (schematically) shows a virtualized system with SLAT. When the guest mode is executed, the processor uses two physical registers (cr3 and an unknown register which holds a pointer onto the nested pagetable). cr3 is freely accessible to the guest, whereas the register for the nested pagetable is not accessible to the guest.

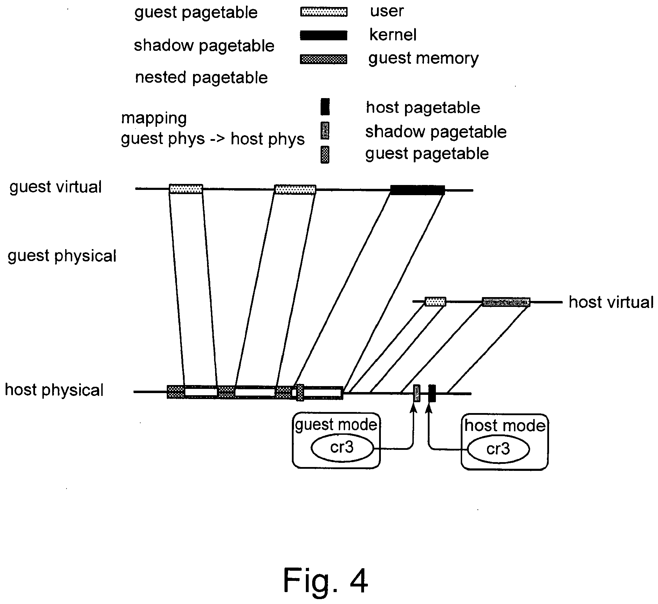

- Figure 4: (schematically) shows shadow-pagetable-based memory virtualization. It is pointed out that at any given time the machine cr3 either holds a pointer onto the shadow pagetable (when the guest mode is executed) or to the host pagetable (when the host mode is executed).
- Figure 5: schematically shows the operation of a guest system under the control of a virtual machine monitor. It is pointed out that the number of pagetables in the guest kernel exceeds the number of shadow pagetables in the hypervisor. By the micro kernel/hypervisor, each virtual machine is equipped with a specific group of shadow pagetables.

The invention is discussed below on the basis of examples.

### Context storage

A substantive part of the performance loss in the memory virtualization in systems without SLAT is due to the costs of the setup of the shadow pagetable. The simplest way of generating a correct shadow pagetable is to use only one shadow pagetable and to completely discard its content in case of a process switching of the guest.

Although in case of an address space switch the current shadow pagetable might be stored for a later use, this is avoided for being considerably complex. Reasons for this are that the guest might modify the corresponding pagetable in the VM, that these modifications are not noticed by the hypervisor, and that the necessary changes in the shadow pagetable are not made in the shadow pagetable. When using this out of date shadow pagetable, the guest has rights which it is not entitled to in view of its guest pagetable.

A possible solution to this problem might be to monitor all guest pagetables for which shadow pagetables exist. Although this is possible, such a monitoring is very involved.

The solution according to the invention uses several shadow pagetables in the hypervisor. The number of shadow pagetables and the resources which they can use is limited, so that it cannot be guaranteed that a shadow pagetable is available for each guest context. When the guest kernel performs a context switch, it should be distinguished between the following three cases:
1. For the activated context there exists a shadow pagetable bound to it. The latter can be further used without a complicated new setup being necessary.
2. For the activated context no pagetable bound to it exists, but unused shadow pagetables are available. One of them is assigned to the context.
3. For the activated context, neither a shadow pagetable bound to it exists nor are unused shadow pagetables available. In this case, a bound shadow pagetable must be selected, which is assigned to the context. Its previous assignment is cancelled and its content is discarded.

In case a guest pagetable is modified, it is the duty of the guest kernel to guarantee the consistency of a possibly existing shadow pagetable. For this purpose it calls the hypervisor by means of a hypercall (mechanism by means of which a guest can require a service provided by the hypervisor; a "hypercall" is the equivalent to a "system call" in non-virtualized systems), which must be inserted into the guest kernel code, and transmits the modified memory context (address of the guest pagetable) and the virtual address by means of which the access was made as arguments. The hypervisor checks whether or not a shadow pagetable is bound to the guest memory context. In this regard, it is distinguished between three cases:
1. No shadow pagetable is bound to the guest memory context. In this case no steps are necessary.
2. A shadow pagetable is bound to the guest memory context, but for the invalidated virtual address there is no entry in the shadow pagetable. Also in this case no steps are necessary.
3. A shadow pagetable is bound to the guest memory context, and for the invalidated virtual address there is an entry in the shadow pagetable. This entry must be deleted.

### Memory virtualization preloading

While it is necessary to invalidate or change a valid entry in the guest pagetable for reasons of correctness, the guest does not have to inform the hypervisor about the setting of a so far invalid entry. As soon as a (shadow) pagefault occurs in this page, the hypervisor finds the valid entry in the guest pagetable and updates the shadow pagetable. A shadow pagefault requires the change from the guest to the hypervisor (VM exit) and back (VM entry), both involved and slow operations.

Reducing the number of these shadow pagefaults is an essential factor in the optimization of the execution speed. One possibility is preloading, a method in which the shadow pagetable is already early filled with entries from the guest pagetable, before the execution would use the related memory areas (and thus the shadow fault would occur).

The simplest option is to immediately inform the hypervisor when the rights of an entry in the guest pagetable are broadened. However, the thus achievable performance increases are limited, because instead of a shadow pagefault a hypercall is necessary, which also requires a VM exit and a VM entry. (In paravirtualized systems, which use shadow pagetables without virtualization extensions, this mode normally makes more sense.)

However, performance increases are possible in cases in which more than one pagetable entry is changed. In this regard it is irrelevant whether right extensions or right restrictions are concerned. Because of the fact that the greatest majority of the pagetable changes relates to user areas (modifications in the kernel address space fall back on other, stronger mechanisms), it is possible to collect the modifications in the guest kernel and transfer them to the hypervisor only before exit into the user mode.

Changes in the guest pagetables are recorded in a queue (with (guest) address space, (guest) virtual address, (guest) physical address as parameters), which is lying on a specifically marked page known to the hypervisor (shared page). As soon as the capacity of the queue is exhausted or the guest returns from the kernel mode into the user mode, the hypervisor is notified by means of a hypercall about the modifications performed in the meantime. It iterates over all queue entries and updates the shadow pagetables accordingly.

If, contrary to expectations, the guest OS itself accessed the respective memory page directly after setup of the table entry, the access would be cancelled as before by means of a shadow pagefault. The extension of the model therefore is completely backward compatible.

### Non-shadow pagefault intercept elision

A shadow pagefault which is caused by the lack of a valid entry in the shadow pagetable can have two reasons:
1. There is no valid corresponding entry in the guest pagetable. A fault is signaled to the guest, which must be resolved by its pagefault handler.
2. There is a valid corresponding entry in the guest pagetable. However, said entry has not yet been entered into the shadow pagetable or an earlier entry was lost when the shadow pagetable containing it was discarded.

As compared to an execution on hardware, the delivery of a guest pagefault (case 1) is clearly slowed down by the way through the hypervisor.

The ratio of the occurrence of the two above-mentioned events depends on the working set size of the guest and the resources available for the shadow pagetables. If it can be guaranteed by a corresponding dimensioning of the shadow pagetables that shadow pagefaults occur rarely, the performance of the system can be increased by optimizing it for the - then more frequent - case of the guest fault. The processor delivers pagefaults directly to the guest kernel without detour via the hypervisor.

Because of the restricted number and capacity of the shadow pagetables, it is possible that bound shadow pagetables are discarded. In this case, the direct guest pagefault optimization leads to the occurrence of pagefaults in the guest for which valid pagetable entries are present, a behavior which is impossible on physical hardware. The pagefault handler of the guest must be adapted such that it calls the hypervisor in this situation, and the hypervisor then updates the shadow pagetable.

In a system without non-shadow pagefault elision, the following steps occur in case of a guest pagefault (see the above section "Pagefault"):
1. fault owing to the absence of a valid entry in the effective pagetable (shadow pagetable)
2. VM exit, control is given to the hypervisor
3. the hypervisor checks the guest pagetable, but cannot find a valid entry
4. VM entry, pagefault injection into the guest VM
5. control is given to the pagefault handler of the guest OS

As compared thereto, with non-shadow pagefault intercept elision, only the following steps are necessary. In particular, no slow privilege transitions occur when changing between guest mode and host mode (VM entry, VM exit):
1. fault owing to the absence of a valid entry in the effective pagetable (shadow pagetable)
2. control is given to the pagefault handler of the guest OS

### Multiprocessor operations

The support of multiprocessor systems requires a respective shadow pagetable subsystem in the hypervisor.

### Local shadow pagetables

The easiest way of supporting multiprocessors is to use shadow pagetables in a processor-local manner.

The advantage of this solution is the conceptual simplicity. As compared to single-processor systems, no additional synchronization arrangements (locks) are necessary.

However, there are two disadvantages:
- When guest processes migrate between processors, their previous shadow pagetables cannot be used further and have to be newly set up on the new processor in an involved manner by means of shadow pagefaults.
- As a consequence of a right reduction of a pagetable entry, an invalidation of the remote shadow pagetables is always necessary.

### Shared shadow pagetables

For avoiding the considerable drawbacks mentioned in the section "Local shadow pagetables", it is recommended that the shadow pagetables are used in a shared manner by processors.

Global shadow pagetables are disadvantageous in that their accesses must be synchronized. In particular, the following two aspects must be considered in this regard:
1. The assignment of address spaces on shadow pagetables must be synchronized. It must be prevented that
   (a) an address space is bound to two different shadow pagetables and that
   (b) an address space is bound to a shadow pagetable which is currently used on another processor.
2. Access to a shadow pagetable itself must be synchronized.

### Preloading

The following discussion is based on a design using shared shadow pagetables and local update queues.

The method for determining the time point up to which shadow pagetable updates can be delayed (switching from the guest kernel mode to the guest user mode), which is used in single-processor systems, can no longer be used in multi-processor systems. The background is that a process can be executed whose address space is affected by updates lying in the queues of the other processors.

**Shared update queue:** This problem can be solved in that all processors use a shared update queue. A processor which changes from the kernel mode into the user mode must check whether this queue contains entries. In the affirmative, the hypervisor must be notified.

This solution is disadvantageous in that a global queue might become a bottleneck.

**Update on lock release:** A further possibility of solving the problem is the use of the synchronization present in the guest when accessing the guest pagetables. The guest uses synchronization mechanisms such as Semaphore in order to guarantee that updates of the pagetable which are executed by different activities (processes, threads) do not disturb each other. The notification of the hypervisor can only be delayed as long as the exclusive access to the guest pagetable is guaranteed. Before the guest again allows access to a pagetable, it must guarantee that the pagetable changes made up to that time were notified to the hypervisor.

If it is assumed that the synchronization of the guest system is correct, the hypervisor should never encounter the situation that a bound shadow pagetable is updated simultaneously by more than one processor. For safety reasons, however, this assumption must not be made because a guest might try to cause a simultaneous update, thereby disregarding its own synchronization rules. For this reason, the hypervisor must make additional arrangements in the form of synchronization mechanisms in order to guarantee that the updates on shadow pagetables do not disturb each other. However, if a concurrency situation is detected, the hypervisor has no obligation to resolve it, allowing for simple measures, such as controlled VM shutdowns.

### Slot management

### Background ASID

The TLB entry of an x86 processor comprises a virtual address, a physical address and the access rights (read/write, kernel/user). In case of process switching, all entries must be invalidated (entries which cover the part of the address space used by the kernel can be marked specifically in the pagetable and are left in the TLB) in order to avoid conflicts with the new address space. It is necessary to newly read the new entries out of the pagetable in the memory in an involved manner.

In order to reduce the number of TLB misses (failed attempt to find a valid entry in the TLB, wherein in such a case (1) either the entry must be loaded from the (effective) pagetable or (2) a pagefault must be caused; in the present case it is assumed that the more favorable case (1) clearly occurs more frequently) in case of frequent process switches, in some architectures such as ARM an additional feature, the so-called address space ID (ASID), was introduced, which is part of any TLB entry. A TLB entry can only be used for translating a virtual address if both the virtual address and the ASID are in agreement. The currently valid ASID is kept in a processor register. Thus, in addition to newly loading the pagetable pointer, it is also necessary to set the current ASID register for the switching of the processor.

In processors with ASIDs it is possible to keep entries of different processes simultaneously in the TLB, wherein, however, some of these entries might be inactive (their ASID does not correspond to the currently valid one).

If the rights of a pagetable entry are reduced or if an address space is completely destroyed, additional steps must be taken for invalidating corresponding entries which are possibly still present in the TLB. In architectures without ASID, this step is only necessary if the active pagetable was modified.

Although the address of the pagetable represents a value which clearly identifies an address space, this value is ill-suited as ASID because ASIDs as a rule consist of clearly less bits for reasons of performance. Therefore, there might be the case that no unique ASID can be assigned to all address spaces. In this case an already assigned ASID must be newly assigned and all corresponding TLB entries must be invalidated.

### Application for shadow pagetables

In the model described above, the hypervisor is responsible for the selection of the shadow pagetable in case a guest address space has to be newly bound to a shadow pagetable. Although in many situations simple assignment strategies (e.g. round robin) provide good results, decisions might be made which lead to considerable performance losses. The kernel of the guest operating system possibly has additional information which would allow it to make a better selection.

In important aspects, the shadow pagetable described in the present invention behaves like a processor with ASIDs. In both cases, entries of several (guest) pagetables are stored in a cache, wherein only a subset is active. While loading is performed automatically (shadow pagefault, TLB miss), the (guest) operating system is responsible for invalidating entries. Therefore, it is convenient to reuse the part of the operating system which supports ASID-compliant processors in this new context.

In the extension of the model described in this section, address spaces for the guest OS are coupled in a visible manner with an ASID. The ASID identifies a shadow pagetable. In case the number of guest processes exceeds the number of available shadow pagetables (and thus ASIDs), it is the task of the guest OS to decide which address space should be decoupled from its shadow pagetable.

In addition to an improved use of the shadow pagetables, this method offers the advantage that it simplifies the implementation of the hypervisor. In particular in multiprocessor systems the synchronization efforts can be reduced.

### Accessed/dirty flags

The processor uses the effective pagetable to signal to the operating system whether and how a page has been accessed. In this regard, it is distinguished between an arbitrary or "accessed" access (in the following also abbreviated as "A") and a writing or "dirty" access (in the following also abbreviated as "D"). An operating system can use this information for deciding whether a page was changed and thus has to be stored ("dirty") or is unchanged ("non-dirty") although it was possible to write thereon and can be discarded. The "accessed" flag can be used for the approximation of the last access which in turn is important for deciding which pages should be displaced in case of a memory shortage.

In a system with SLAT (see the above section "Second level address translation (SLAT)"), the processor knows the guest pagetable. It can write the A/D flags (A/D: "accessed/dirty") directly into this guest pagetable.

In a system with shadow pagetables, the processor does not know the guest pagetable and rather writes the access information into the shadow pagetable known to it. It is the task of the hypervisor to guarantee that this information is available to the guest.

Three solutions are possible:
1. One possibility is to always enter pages into the memory virtualization with minimum rights (guest: not accessed - memory virtualization: invalid; guest: write - memory virtualization: read-only). This guarantees that each access which would modify the A/D flags causes an access fault. The hypervisor changes the guest pagetable in accordance with the occurred access, extends the rights in the shadow pagetable and continues the execution. The drawbacks of this solution are the considerable performance losses.
2. Alternatively, it is possible that whenever the shadow pagetable is updated, the hypervisor simultaneously sets the maximum A/D flags in the guest pagetable (read-only: accessed; writable: accessed, dirty) irrespective of whether there is an access or not. This solution is disadvantageous in that the operating system takes steps which would not be necessary. (Re-writing data onto data carriers which it erroneously considers to be changed.)
3. A third possibility is to accumulate the A/D flags in the shadow pagetable. When the guest is interested in the state of a page, it does not directly read it out of the (guest) pagetable but requests it by means of a hypercall from the hypervisor. If a context is displaced from the shadow pagetable due to a capacity bottleneck, the hypervisor must write the flags accumulated so far into the guest pagetable.
This solution should only be selected if sufficient resources of the shadow pagetables guarantee that address spaces are only rarely displaced from their shadow pagetables.

### Support for real-time execution

In some applications, in particular in control engineering, the time elapsing between the occurrence of an event and the start of the handling routine is an important metric. In general, address space switching is necessary for running the handling routine.

Since the set-up of a context in the shadow pagetable might require much time (in particular if also pre-population techniques (see the above section "Memory virtualization preloading") cannot be used), it is important that this case is avoided. There are two different cases:
1. In case the guest kernel is responsible for assigning address spaces to shadow pagetables (see the above section "Slot management"), it has to guarantee that the context of the treatment routine remains bound to a shadow pagetable.
2. In case the hypervisor has to decide which address space is bound for which time to which shadow pagetable, the guest must be able to mark selected address spaces as being particular. This can be done, e.g., by means of a hypercall. Address spaces marked in this manner never lose their binding to the shadow pagetable assigned to them (see the above section "Binding").

## Claims

1. A method for memory virtualization for systems with processors which offer virtualization support, the virtualization support not having a second level address translation, SLAT, wherein the system comprises at least the guest virtual, guest physical and host physical address spaces, and wherein the system further comprises:
a guest pagetable for translating addresses of the guest virtual address space into addresses of the guest physical address space,
a shadow pagetable for translating addresses of the guest virtual address space into addresses of the host physical address space, wherein a guest operating system does not have access to the shadow pagetable, and
a hypervisor which is configured for calculating address entries for the shadow pagetable from respectively valid address entries in the guest pagetable, and for entering said calculated address entries for the shadow pagetable into the shadow pagetable,
managing one or more shadow pagetables by the hypervisor while the guest context is executed by the guest operating system, wherein the number of the one or more shadow pagetables is smaller than or equal to the number of guest contexts in the current working set,
recording the modifications of the guest pagetables in a queue,
wherein after exhaustion of the capacity of the queue or when the guest operating system is changing from the kernel mode to the user mode, the hypervisor is informed about the modifications of the guest pagetables which have been performed so far and which are recorded in the queue,
the hypervisor updates the one or more shadow pagetables in accordance with the modifications recorded in the queue by iterating over all queue entries, and
the processors are configurable to transmits a guest pagefault to the kernel of the guest operating system directly, without intervention of the hypervisor;
**characterized in that**
the pagefault treatment routine of the guest operating system is configured such that in a situation in which a shadow pagetable which was previously bound to a guest context had its content discarded when the memory virtualization exceeds its memory allotment predetermined by the hypervisor, and wherein a pagefault occurred in the guest operating system due to the no longer present shadow pagetable content, the pagefault treatment routine calls the hypervisor,
wherein the hypervisor is configured such that after having been called by the pagefault treatment routine in a situation in which a shadow pagetable which was previously bound to a guest context had its content discarded and wherein a pagefault occurred in the guest operating system due to the no longer present shadow pagetable content, the hypervisor updates the shadow pagetable.

2. The method according to claim 1, wherein after modification of the guest pagetable by a guest - as far as a shadow pagetable bound to said guest context exists - the kernel of the guest operating system guarantees the consistency of the guest pagetable with the shadow pagetable bound to the guest context.

3. The method according to claim 2, wherein the kernel of the guest operating system calls the hypervisor by means of a hypercall, providing the hypervisor with the following arguments:
the modified guest memory context, in particular the address of the modified entry in the guest pagetable, and
the address of the guest physical address space.

4. The method according to claim 1, 2 or 3, wherein the recording of the modifications of the guest pagetables in the queue is realized by recording one or more parameter triples.

5. The method according to claim 4, wherein the parameter triples comprise:
(i) the modified guest context,
(ii) the modified virtual address in the modified guest context, and
(iii) the address in the guest physical address space assigned to the modified virtual address in the modified guest context.

6. The method according to any one of claims 1 to 5, wherein the queue is lying on a marked page of the virtual address space and/or a page of the virtual address space which is known to the hypervisor.

7. The method according to any one of claims 1 to 6, wherein the hypervisor is informed about the modifications of the guest pagetables, which have meanwhile been made and which are recorded in the queue, by means of a hypercall.

8. The method according to any one of claims 1 to 7, wherein the system is a multi-processor system.

9. The method according to claim 8, wherein the shadow pagetables are used by the processors in a shared manner.

10. The method according to claim 8 or 9, wherein modifications of the guest pagetables are recorded in a single queue which is used in a shared manner by all processors.

11. The method according to claim 10, wherein recording of the modifications of the guest pagetables takes place in accordance with the following condition(s):
(A) recording into a queue is performed only as long as there is an exclusive access to the guest pagetable on the guest level, and/or
(B) before the end of the exclusive access to a guest pagetable on the guest level, the modifications recorded so far in the queue are notified to the hypervisor.

12. The method according to any one of claims 1 to 11 + , wherein the hypervisor decides which address space is bound for which time to which shadow pagetable and wherein the guest operating system can mark selected address spaces in a particular manner, and wherein address spaces marked in this manner never lose their binding to the respective shadow pagetable assigned to them.

13. The method according to claim 12, wherein the guest operating system can mark selected address spaces by a hypercall.

14. The method according to claim 12 or 13, wherein the system has to react to events in real time.

15. The method according to claim 14, wherein the event is an interrupt request (IRQ).

## Patentansprüche

1. Verfahren zur Speichervirtualisierung für Systeme mit Prozessoren, die eine Virtualisierungsunterstützung bieten, wobei die Virtualisierungsunterstützung keine Adressübersetzung der zweiten Ebene, SLAT, aufweist, wobei das System mindestens virtuelle Gast-, physikalische Gast- und physikalische Hostadressräume aufweist, und wobei das System ferner aufweist: eine Gastseitentabelle zum Übersetzen von Adressen des virtuellen Gastadressraums in Adressen des physikalischen Gastadressraums, eine Schattenseitentabelle zum Übersetzen von Adressen des virtuellen Gastadressraums in Adressen des physikalischen Hostadressraums, wobei ein Gastbetriebssystem keinen Zugriff auf die Schattenseitentabelle hat, und einen Hypervisor, der konfiguriert ist zum Berechnen von Adresseinträgen für die Schattenseitentabelle aus jeweils gültigen Adresseinträgen in der Gastseitentabelle und zum Eingeben der berechneten Adresseinträge für die Schattenseitentabelle in die Schattenseitentabelle, wobei eine oder mehrere Schattenseitentabellen durch den Hypervisor verwaltet werden, während der Gastkontext durch das Gastbetriebssystem ausgeführt wird, wobei die Anzahl der einen oder mehreren Schattenseitentabellen kleiner oder gleich der Anzahl der Gastkontexte in der gegenwärtigen Arbeitsmenge ist, Aufzeichnen der Modifikationen der Gastseitentabellen in einer Warteschlange, wobei nach Erschöpfung der Kapazität der Warteschlange oder wenn das Gastbetriebssystem vom Kernelmodus in den Benutzermodus wechselt, der Hypervisor über die Modifikationen der Gastseitentabellen informiert wird, die bisher durchgeführt worden sind und die in der Warteschlange aufgezeichnet sind, der Hypervisor die eine oder die mehreren Schattenseitentabellen gemäß den in der Warteschlange aufgezeichneten Modifikationen durch Iterieren über alle Warteschlangeneinträge aktualisiert, und die Prozessoren konfigurierbar sind, ohne Eingriff des Hypervisors einen Gastseitenfehler direkt an den Kern des Gastbetriebssystems zu übertragen; **dadurch gekennzeichnet, dass** die Seitenfehlerbehandlungsroutine des Gastbetriebssystems so konfiguriert ist, dass in einer Situation, in der der Inhalt einer Schattenseitentabelle gelöscht wurde, die zuvor an einen Gastkontext gebunden war, wenn die Speichervirtualisierung ihre durch den Hypervisor vorgegebene Speicherzuteilung überschreitet, und wobei ein Seitenfehler im Gastbetriebssystem infolge des nicht mehr vorhandenen Schattenseitentabelleninhalts auftrat, die Seitenfehlerbehandlungsroutine den Hypervisor aufruft, wobei der Hypervisor so konfiguriert ist, dass nachdem er durch die Seitenfehlerbehandlungsroutine in einer Situation aufgerufen worden ist, in der der Inhalt einer Schattenseitentabelle gelöscht wurde, die zuvor an einen Gastkontext gebunden war, und wobei ein Seitenfehler im Gastbetriebssystem infolge des nicht mehr vorhandenen Schattenseitentabelleninhalts auftrat, der Hypervisor die Schattenseitentabelle aktualisiert.

2. Verfahren nach Anspruch 1, wobei nach einer Modifikation der Gastseitentabelle durch einen Gast soweit eine an den Gastkontext gebundene Schattenseitentabelle vorhanden ist - der Kern des Gastbetriebssystems die Übereinstimmung der Gastseitentabelle mit der an den Gastkontext gebundenen Schattenseitentabelle sicherstellt.

3. Verfahren nach Anspruch 2, wobei der Kern des Gastbetriebssystems den Hypervisor mittels eines Hyperaufrufs aufruft, der dem Hypervisor die folgenden Argumente liefert:
den modifizierten Gastspeicherkontext, insbesondere die Adresse des modifizierten Eintrags in der Gastseitentabelle, und die Adresse des physikalischen Gastadressraums.

4. Verfahren nach Anspruch 1, 2 oder 3, wobei das Aufzeichnen der Modifikationen der Gastseitentabellen in der Warteschlange durch Aufzeichnen von einer oder mehreren Parametertripeln realisiert wird.

5. Verfahren nach Anspruch 4, wobei die Parametertripel aufweisen:
(i) den modifizierten Gastkontext,
(ii) die modifizierte virtuelle Adresse im modifizierten Gastkontext, und
(iii) die Adresse im physikalischen Gastadressraum, die der modifizierten virtuellen Adresse im modifizierten Gastkontext zugewiesen ist.

6. Verfahren nach einem der Ansprüche 1 bis 5, wobei die Warteschlange auf einer markierten Seite des virtuellen Adressraums und/oder einer Seite des virtuellen Adressraums liegt, die dem Hypervisor bekannt ist.

7. Verfahren nach einem der Ansprüche 1 bis 6, wobei der Hypervisor mittels eines Hyperaufrufs über die Modifikationen der Gastseitentabellen informiert wird, die inzwischen vorgenommen wurden und die in der Warteschlange aufgezeichnet sind.

8. Verfahren nach einem der Ansprüche 1 bis 7, wobei das System ein Multiprozessorsystem ist.

9. Verfahren nach Anspruch 8, wobei die Schattenseitentabellen durch die Prozessoren in einer gemeinsam genutzten Weise verwendet werden.

10. Verfahren nach Anspruch 8 oder 9, wobei Modifikationen der Gastseitentabellen in einer einzelnen Warteschlange aufgezeichnet werden, die in einer gemeinsam genutzten Weise durch alle Prozessoren verwendet wird.

11. Verfahren nach Anspruch 10, das Aufzeichnen der Modifikationen der Gastseitentabellen gemäß der (den) folgenden Bedingung(en) erfolgt:
(A) das Aufzeichnen einer Warteschlange wird nur durchgeführt, solange es einen ausschließlichen Zugriff auf Gastseitentabelle auf der Gastebene gibt, und/oder
(B) vor dem Ende des ausschließlichen Zugriffs auf eine Gastseitentabelle auf der Gastebene werden die bisher in der Warteschlange aufgezeichneten Modifikationen dem Hypervisor mitgeteilt.

12. Verfahren nach einem der Ansprüche 1 bis 11, wobei der Hypervisor entscheidet, welcher Adressraum für welche Zeit an welche Schattenseitentabelle gebunden ist und wobei das Gastbetriebssystem ausgewählte Adressräume in einer bestimmten Weise markieren kann, und wobei auf diese Weise markierte Adressräume niemals ihre Bindung an die ihnen zugewiesene jeweilige Schattenseitentabelle verlieren.

13. Verfahren nach Anspruch 12, wobei das Gastbetriebssystem ausgewählte Adressräume durch einen Hyperaufruf markieren kann.

14. Verfahren nach Anspruch 12 oder 13, wobei das System in Echtzeit auf Ereignisse reagieren muss.

15. Verfahren nach Anspruch 14, wobei das Ereignis eine Unterbrechungsanforderung (IRQ) ist.

## Revendications

1. Procédé de virtualisation de la mémoire pour des systèmes avec des processeurs offrant un support de virtualisation, ledit support de virtualisation étant dépourvu de traduction d'adresse de second niveau, SLAT, où le système comprend au moins les espaces d'adressage d'invité virtuel, d'invité physique et hôte physique, et où le système comprend en outre :
une table des pages d'invité pour la traduction d'adresses de l'espace d'adressage d'invité virtuel en adresses de l'espace d'adressage d'invité physique,
une table des pages fantôme pour la traduction d'adresses de l'espace d'adressage d'invité virtuel en adresses de l'espace d'adressage hôte physique, un système d'exploitation invité n'ayant pas accès à la table des pages fantôme, et
un hyperviseur prévu pour calculer des entrées d'adresses pour la table des pages fantôme à partir d'entrées d'adresses valides respectives dans la table des pages d'invité, et pour entrer lesdites entrées d'adresses calculées pour la table des pages fantôme dans la table des pages fantôme,
gérer une ou plusieurs tables des pages fantômes par l'hyperviseur pendant l'exécution du contexte d'invité par le système d'exploitation invité, le nombre de la ou des tables des pages fantômes étant inférieur ou égal au nombre de contextes d'invité dans l'espace de travail actuellement actif,
enregistrer les modifications de la table des pages d'invités dans une file d'attente, où, lorsque la capacité de la file d'attente est saturée, ou que le système d'exploitation invité passe du mode noyau au mode utilisateur, l'hyperviseur est informé des modifications de la table des pages d'invités effectuées jusqu'alors et enregistrées dans la file d'attente,
l'hyperviseur met à jour la ou les tables des pages fantômes en fonction des modifications enregistrées dans la file d'attente par itération sur toutes les entrées de file d'attente, et les processeurs sont configurables pour transmettre directement une erreur de page d'invité au noyau du système d'exploitation invité, sans intervention de l'hyperviseur ;
**caractérisé en ce que**
la routine de traitement d'erreur de page du système d'exploitation invité est configurée pour que, dans une situation où une table des pages fantôme précédemment liée à une contexte d'invité a eu son contenu rejeté lorsque la virtualisation de la mémoire excède son allocation de mémoire prédéterminée par l'hyperviseur, et où une erreur de page est survenue dans le système d'exploitation invité en raison de l'absence de contenu de la table des pages fantôme, la routine de traitement d'erreur de page appelle l'hyperviseur, l'hyperviseur étant configuré pour actualiser la table des pages fantôme, après avoir été appelé par la routine de traitement d'erreur de page dans une situation où une table des pages fantôme précédemment liée à une contexte d'invité a eu son contenu rejeté, et où une erreur de page est survenue dans le système d'exploitation invité en raison de l'absence de contenu de la table des pages fantôme,.

2. Procédé selon la revendication 1, où, après modification de la table des pages d'invité par un invité - dans la mesure où une table des pages fantôme liée au contexte d'invité est existante - le noyau du système d'exploitation invité garantit la consistance de la table des pages d'invité avec la table des pages fantôme liée au contexte d'invité.

3. Procédé selon la revendication 2, où le noyau du système d'exploitation invité appelle l'hyperviseur au moyen d'un hyperappel, dotant l'hyperviseur des arguments suivants :
le contexte de mémoire de mémoire d'invité modifié, en particulier l'adresse de l'entrée modifiée dans la table des pages d'invité, et
l'adresse de l'espace d'adressage d'invité physique.

4. Procédé selon la revendication 1, la revendication 2 ou la revendication 3, où l'enregistrement des modifications de la table des pages d'invités dans la file d'attente est réalisé par enregistrement d'un de plusieurs triplets de paramètres.

5. Procédé selon la revendication 4, où les triplets de paramètres comprennent :
(i) le contexte d'invité modifié,
(ii) l'adresse virtuelle modifiée dans le contexte d'invité modifié, et
(iii) l'adresse dans l'espace d'adressage d'invité physique affectée à l'adresse virtuelle modifiée dans le contexte d'invité modifié.

6. Procédé selon l'une des revendications 1 à 5, où la file d'attente est présentée sur une page marquée de l'espace d'adressage virtuel et/ou une page de l'espace d'adressage virtuel connue de l'hyperviseur.

7. Procédé selon l'une des revendications 1 à 6, où l'hyperviseur est informé des modifications de la table des pages d'invités qui ont été faites entretemps et qui sont enregistrées dans la file d'attente au moyen d'un hyperappel.

8. Procédé selon l'une des revendications 1 à 7, où le système est un système multiprocesseurs.

9. Procédé selon la revendication 8, où les tables des pages fantômes sont utilisés de manière partagée par les processeurs.

10. Procédé selon la revendication 8 ou la revendication 9, où les modifications de la table des pages d'invités sont enregistrées dans une file d'attente unique, utilisée de manière partagée par tous les processeurs.

11. Procédé selon la revendication 10, où l'enregistrement des modifications de la table des pages d'invités a lieu en fonction de la ou des conditions suivantes :
(A) l'enregistrement dans une file d'attente n'est effectué que si un accès exclusif est présenté vers la table des pages d'invité sur le niveau d'invité, et/ou
(B) avant la fin de l'accès exclusif à une table des pages d'invité sur le niveau d'invité, les modifications enregistrées jusqu'alors dans la file d'attente sont notifiées à l'hyperviseur.

12. Procédé selon l'une des revendications 1 à 11, où l'hyperviseur décide quel espace d'adressage est lié pour combien de temps à quelle table des pages fantôme, et où le système d'exploitation invité peut marquer des espaces d'adressage sélectionnés de façon particulière, et où les espaces d'adressage marqués de cette façon ne perdent jamais leur liaison à la table des pages fantôme qui leur est respectivement affectée.

13. Procédé selon la revendication 12, où le système d'exploitation invité peut marquer des espaces d'adressage sélectionnés par hyperappel.

14. Procédé selon la revendication 12 ou la revendication 13, où le système doit réagir à des événements en temps réel.

15. Procédé selon la revendication 14, où l'événement est une requête d'interruption (IRQ).
